(19) Europäisches Patentamt / European Patent Office / Office européen des brevets

(11) **EP 1 746 746 A1**

(12) **EUROPEAN PATENT APPLICATION**

(43) Date of publication:
**24.01.2007 Bulletin 2007/04**

(51) Int Cl.:
*H04B 10/18* (2006.01)    *H04B 10/155* (2006.01)

(21) Application number: **05291545.1**

(22) Date of filing: **19.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ALCATEL**
**75008 Paris (FR)**

(72) Inventor: **Buchali, Fred**
**71336 Waiblingen (DE)**

(74) Representative: **Kohler Schmid Möbus**
**Patentanwälte**
**Ruppmannstrasse 27**
**70565 Stuttgart (DE)**

(54) **Optical transmitter with predistortion generator**

(57)    A device (2) for transmitting an optical signal (OS) via an optical transmission link (4), which induces chromatic dispersion of the optical signal (OS), the device (2) comprising filter means (6) for predistorting the optical signal (OS) in accordance with an input signal (IN) for the filter means (6) prior to transmission via the optical transmission link (4), according to the present invention said filter means (6) comprise at least one feed forward equaliser (13, 14). Thus the inventive device (2) can be used in data transmission systems, which are subject to chromatic dispersion of the transmitted signals (OS) to drastically reduce the complexity of system realisation, hence leading to lower system costs with respect to hardware expenditure as well as power consumption.

Fig. 5

EP 1 746 746 A1

**Description**

Background of the invention

The invention relates to a device for transmitting an optical signal via an optical transmission link, which induces chromatic dispersion of the optical signal, the device comprising filter means for predistorting the optical signal in accordance with an input signal for the filter means prior to its transmission via the optical transmission link.

Chromatic, i.e. wavelength-dependent dispersion compensation is a key issue for the design and operation of transmission systems with data rates of 10 Gb/s and beyond. Usually a dispersion compensation fiber (DCF) is used, which entails significant attenuation of signals and leads to an increase in system costs. More and more, systems without any chromatic dispersion (CD) compensation therefore are of interest for metro applications with overall system lengths ranging up to several hundreds of kilometers. For systems up to 80 km, an electronic equaliser (analog or digital) is capable to mitigate the above-mentioned CD disadvantages. For higher CD, suitable modulation formats in combination with prechirped signals lead to an additional extension of the system range. The most flexible solution achieving the longest reach, however, is a system which transmits a predistorted signal in order to cope with the effects of CD.

Prior art document WO 2004/032385 A1 discloses an optical communication system for transmitting predistorted optical signals, wherein signal predistorsion is based on the calculation of magnitude and phase of real part and imaginary part of a transmitted signal by means of a digital signal processor (DSP) with a high degree of complexity. According to the teaching of said document a predistorted signal is determined in the digital domain using look-up tables or digital filters. The predistorted signal is then fed to a digital-to-analog (D/A) converter, which generates a corresponding analog signal. The analog signal is subsequently fed to a modulator, which enables separate modulation of the optical signal with respect to its magnitude and phase.

The approach described above suffers from complexity of realisation, especially in terms of required number of interconnects between DSP and DAC. For an output signal at 20 GS/s with a 6 bit resolution in terms of magnitude and phase, respectively, the overall data rate is 240 Gb/s. This leads to a considerable effort on the hardware side and to an elevated power consumption. Working with 622 Mb/s for interconnects between the DSP and the D/A converter, as much as 384 signal lines are required. The latter are usually realised differentially thus leading to 768 signal lines and processor chip input/output pins (IOs).

Object of the invention

It is the object of the present invention to provide a device of the above-mentioned type which can be used in data transmission systems, in particular optical data transmission systems, which are subject to chromatic dispersion of the transmitted signals, to drastically reduce the complexity of system realisation, thus leading to reduced system costs with respect to hardware expenditure as well as power consumption.

Description of the invention

This object is achieved by a device of the above-mentioned type, wherein said filter means comprise at least one feed forward equaliser (FFE), i.e. a FIR (finite impulse response) non-recursive filter. In this way the invention leads to a drastic reduction of realisation complexity for a transmission system involving signal predistorsion. For instance, use of a DSP with a very high number of data outputs is no longer necessary. The same holds for the use of a D/A converter with high resolution. The reduced complexity in turn entails lower costs per system and savings in terms of power consumption.

Advantageously, the input signal is a digital signal, i.e. a sequence of noise free binary data bits with a predetermined bit period comprising data to be transmitted via the optical transmission link by means of the optical signal. In the FFE the digital input signal is delayed in a series of delay stages, i.e. digital delay means in the form of a so-called FIR tapped delay line. In a variant of the inventive device each of the digital delay means has a delay of exactly one bit period of the input signal and a pure digital signal in forward path. Such delay means are commonly known as unit delays. The realisation of the delay stages as purely digital delay means contributes to the overall simplified and improved structure of the inventive device by providing a highly simplified delay structure without any signal distortion. This obviates the common disadvantage of high bit-rate FFEs with respect to signal distortion in the forward path, on which the signal is delayed by several bit periods.

According to a further development of the invention the feed forward equaliser comprises analog multiplying and adding means, whereas all other components are digital elements. However, it is well known to a person skilled in the art that multipliers and adding means can easily be implemented as analog functional elements with high performance.

In a variant of the device according to the invention the feed forward equaliser provides an output signal usable for driving a modulator for modulating the optical signal. The FFE of the inventive device thus operates as a predistorsion preprocessor whose output signal can be used directly for driving the modulator, e.g. either its modulation magnitude or phase if only one FFE is used, which "imprints" the data to be sent on an optical carrier wave using a convenient coding scheme, such as RZ, NRZ, or the like.

If oversampling of the input signal is required, according to a preferred further development of the inventive device the filter means may comprise two feed forward equalisers in parallel connection. The two FFEs will then operate in parallel with subsequent multiplexing. Alternatively, the feed forward equaliser may comprise delay means each having a delay of a fraction of one bit period of the input signal, i.e. a fractionally spaced FFE, which is sampled for instance at T/2 or T/3, T being the bit period.

A FIR filter basically is a weighted sum over a limited set of digital input values, i.e. based on a linear equation of the following type:

$$y(t) = c_0 \cdot x(t) + c_1 \cdot x(t-1) + c_2 \cdot x(t-2) + \ldots + c_n \cdot x(t-n) \, ,$$

wherein $y(t)$ is the filter output at time t, $x(t-k)$ is a history of previous inputs with k running from 0 to n, and the $c_k$ are static tap weights (multiplication coefficients). In order to implement non-linear contributions the feed forward equaliser in the inventive device, i.e. the filter means can comprise a tapped delay line with a number of weighted taps in connection with a common adding means, at least two of said taps, e.g. indexed i and j, being in connection with a transfer means, in particular a logic circuit such as an AND-gate, arranged in weighted connection (weighting value $c_{i-j}$) with said adding means. By this means, the respective delayed signal values on the two taps in question can be fed to said transfer means prior to their respective multiplication with a corresponding weighting factor $c_i$, $c_j$, which provides a non-linear contribution at the summing point of the inventive device.

Advantageously, the tap weighting values are supplied by value delivery means for determining and delivering values for weighting contributions of the input signal in the feed forward equaliser. The number of taps, i.e. the quantity n introduced above, is determined by the dispersion of the transmission medium itself, e.g. an optical waveguide fiber.

An additional difficulty with transmission devices of the above-mentioned kind is the generally non-linear transmission function of the modulator. In order to cope with this problem, in another variant of the invention an analog circuit element is arranged between and in connection with both the feed forward equaliser and a modulator for modulating the optical signal, said analog circuit element having an inverse transmission function for an output signal of the feed forward equaliser with respect to a corresponding transmission function of said modulator and/or a driver circuit for said modulator. Owing to the insertion of such an inverse non-linear analog circuit between the FFE and the modulator the overall transmission function of the arrangement can be made fully linear. Furthermore, the modulator usually requires a driver means with high output voltages. Such drivers generally suffer from inherent distortions which can be balanced by means of the aforementioned inverse non-linear analog circuit, too.

Further advantages and characteristics of the present invention can be gathered from the following description of a preferred embodiment with reference to the enclosed drawings. The features mentioned above as well as below can be used in accordance with the invention either individually or in conjunction. The embodiments mentioned are not to be understood as an exhaustive enumeration but rather as examples with regard to the underlying concept of the present invention.

Drawings

Fig. 1    is a schematic block diagram of an optical signal transmission system comprising a device according to the invention;

Fig. 2    is a schematic block diagram of a first FFE structure used in a device according to the invention;

Fig. 3    is a schematic block diagram of a second FFE structure used in a device according to the invention;

Fig. 4    is a schematic block diagram of a first filter means used in a device according to the invention comprising two FFEs; and

Fig. 5    is a schematic block diagram of a second filter means used in a device according to the invention comprising additional non-linear circuitry.

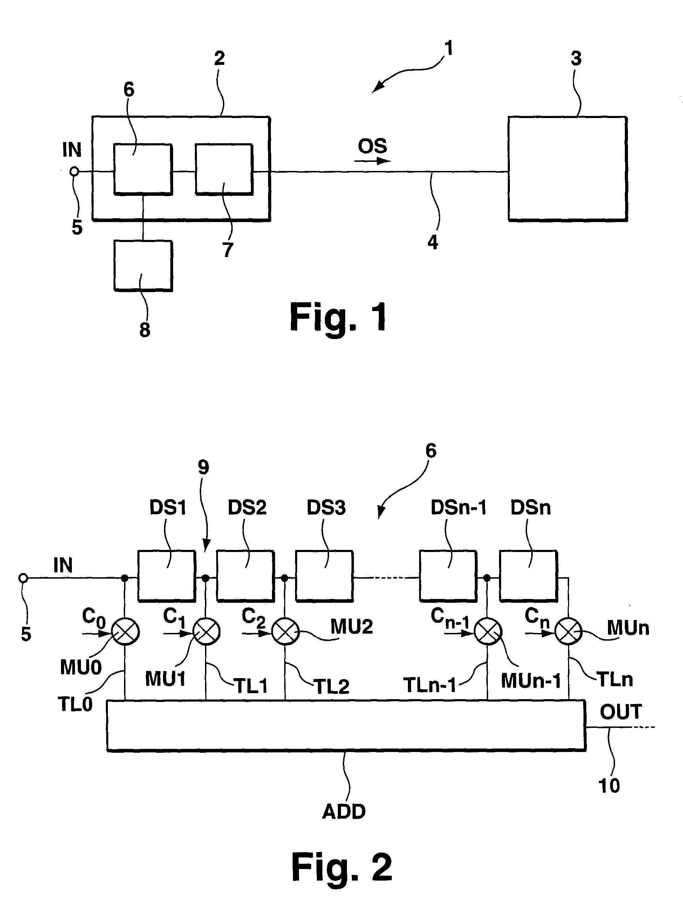

**Fig. 1** shows a general transmission system **1** for an optical signal **OS.** The system 1 comprises a device **2** for transmitting the optical signal OS according to the invention, hereinafter also referred to as a transmitter, and a receiver **3** for receiving the optical signal OS. The transmitter 2 and the receiver 3 are connected by means of a transmission link **4,** e.g. an optical waveguide fiber, which is adapted for transmission of the optical signal OS and which is generally subject to chromatic dispersion of the transmitted optical signal OS. The receiver 2 comprises an input pin **5** for a digital input signal **IN** in operative connection with filter means **6,** the design of which will be described in greater detail hereinafter. The filter means 6 is also connected with a modulator **7** for modulating a suitable light wave emitted by a light source, e.g. a laser light source (not shown), with an output signal from the filter means 6 in order to generate the optical signal OS to be transmitted via the transmission link 4**.** The system 1 furthermore comprises a value delivery means **8** for determining and/or delivering tap weighting values in operative connection with the filter means 6, whose function and design will also be described in more detail in the following. According to the present embodiment of the inventive device the value delivery means 8 is shown as a unit separate from the transmitter 2. However, it could also be designed as an integral part of the latter.

**Fig. 2** shows a detailed block diagram of the filter means 6 comprised in the inventive transmitter 2 according to a first embodiment. The filter means 6 is designed as a feed forward equaliser (FFE) comprising a delay line **9** for delaying a purely digital input data signal IN in a series of n digital delay stages **DS1-DSn,** commonly referred to as unit delays for delaying the input signal IN by one bit period each. For reasons of clarity, only five delay stages DS1-DS3, DSn-1, DSn are depicted. The delay stages DS1-DSn are realised in the form of purely digital delay stages arranged in the forward path of the input signal IN, e.g. in the form of a shift register used for storing the most recent values of a continuously sampled digital signal, thus leading to a simplified delay structure without any distortion of the input signal IN as known to a person skilled in the art. The delay line 9 is tapped behind every delay stage DS1-DSn ("downstream" with respect to the signal input 5), e.g. behind each flip-flop in the case of a shift register, as well as "upstream" of the first delay stage DS1 by means of tap lines **TL0-TLn,** which are connected to a common analog adding means **ADD.** The adding means ADD has an output **10** for an output signal **OUT** of the feed forward equaliser. The output 10 is connected with the modulator 7 (cf. Fig. 1). In each of the tap lines TL0-TLn is arranged an analog multiplier **MUO-MUn,** respectively, for multiplying a current bit value x(t) of the input signal IN as well as bit values x(t-k·T), k = 1,...,n, where T denotes the bit period, at each delay stage DS1-DSn, i.e. at corresponding earlier bit periods, with a static weighting factor $c_0$-$c_n$**,** respectively. The weighted contributions on every tap line TL0-TLn, i.e. $c_0 \cdot x(t)$, $c_1 \cdot x(t-T)$,...,$c_n \cdot x(t-n \cdot T)$, are then fed to the adding means ADD for performing a summing operation, thus determining a predistorted signal in the form of the output signal OUT for directly driving the modulator 7 (cf. Fig. 1). The weighting values $c_0$-$c_n$ are provided by the value delivery means 8 (cf. Fig. 1), which can be a digital processor or an analog circuitry, either by reading a stored look-up table or by feedback, e.g. from the receiver 3 (cf. Fig. 1), by means of a suitable feedback line (not shown).

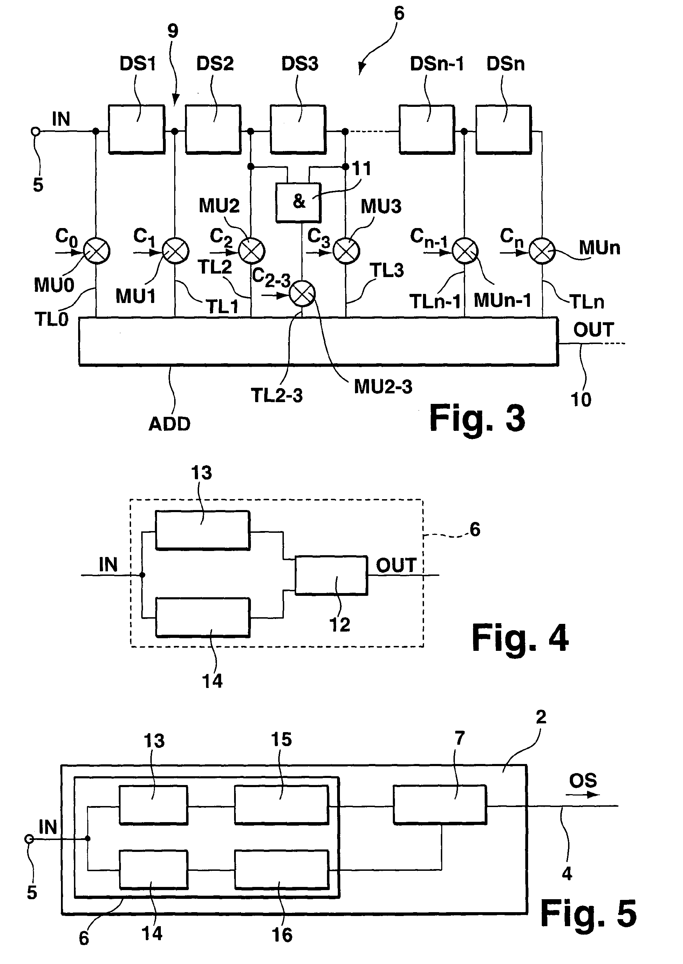

According to the embodiment shown in **Fig. 3,** non-linear contributions to the output signal OUT can be realised by a simple extension with respect to the filter means 6 as described above with reference to Fig. 2. To this end, the filter means 6 comprise an additional signal transfer means in the form of a logic circuit element **11,** in particular an AND-gate, which is arranged between and in operative connection with the tap lines TL2 and TL3 upstream of the corresponding multipliers MU2 and MU3, respectively. Downstream of the logic circuit element 11 in a corresponding additional tap line **TL2-3** is included a corresponding additional multiplier **MU2-3** for multiplying an output value of the logic circuit element 11 with a tap weight $c_{2\text{-}3}$ prior to summing in the adding means ADD.

For a 10 Gb/s input signal IN the output signal of the filter means 6 is compatible with a 10 Gb/s system 1. However, if oversampling of the input signal IN is required, two feed forward equalisers according to the embodiments shown in Figs 2 and 3 may be arranged to operate in parallel, followed by a time domain multiplexer **12,** as depicted in **Fig. 4.** In this embodiment of the inventive device 2 (cf. Fig. 1) a first feed forward equaliser **13** accounts for the even bit periods of the output signal OUT whereas a second feed forward equaliser **14** arranged in parallel connection with respect to the first FFE 13 provides the odd bit periods of the output signal OUT. As in Figs 1-3, the output signal is again used to drive the modulator 7. Alternatively, the delay stages DS1-DSn in a filter means 6 according to either Fig. 2 or Fig. 3 can be realised with spacings corresponding to half of the bit period T, i.e. with spacings equal to T/2, or other suitable fractions of the bit period T (not shown).

Finally, **Fig. 5** shows an embodiment of the inventive device 2 in which the filter means 6 again comprises two FFE structures 13, 14 arranged in parallel connection for driving a modulator 7, wherein one FFE 13 drives the modulator 7 with respect to the magnitude of modulation while the other FFE 14 drives the modulator 7 with respect to the modulation phase to generate the optical signal OS to be transmitted via transmission link 4. As the modulator 7 generally has a non-linear transmission function for both analog and digital predistorsion generation, non-linear analog circuits **15, 16,** respectively, have been inserted between each FFE 13, 14 and the modulator 7. The non-linear circuits 15, 16 are chosen to present an inverse non-linear transmission function compared with the modulator 7, thus making the overall transmission function of the arrangement fully linear. Furthermore, the modulator 7 generally requires a driver circuit (not shown) with higher output voltages. Such driver circuits also suffer from inherent distortion, which can be suppressed by means of the aforementioned non-linear circuits 15, 16, too.

Thus the transmission device according to the invention allows the realisation of transmission systems, in particular optical data transmission systems, which are subject to chromatic dispersion of the transmitted signals, with drastically reduced system complexity, entailing reduced system costs with respect to hardware expenditure as well as power consumption.

**Claims**

1. Device (2) for transmitting an optical signal (OS) via an optical transmission link (4), which induces chromatic dispersion of the optical signal (OS), the device (2) comprising filter means (6) for predistorting the optical signal (OS) in accordance with an input signal (IN) for the filter means (6) prior to its transmission via the optical transmission link (4),
   **characterised in that** said filter means (6) comprise at least one feed forward equaliser (13, 14).

2. Device according to claim 1, **characterised in that** the input signal (IN) is a digital signal comprising data to be transmitted via the optical transmission link (4) by means of the optical signal (OS).

3. Device according to claim 1, **characterised in that** the feed forward equaliser (13, 14) comprises digital delay means (DS1-DSn) each having a delay of one bit period of the input signal (IN).

4. Device according to claim 1, **characterised in that** the feed forward equaliser (13, 14) comprises analog multiplying and adding means (MU0-MUn, ADD).

5. Device according to claim 1, **characterised in that** the feed forward equaliser (13, 14) provides an output signal (OUT) usable for driving a modulator (7) for modulating the optical signal (OS).

6. Device according to claim 1, **characterised in that** the filter means (6) comprise two feed forward equalisers (13, 14) in parallel connection.

7. Device according to claim 1, **characterised in that** the feed forward equaliser (13, 14) comprises delay means (DS1, DSn) each having a delay of a fraction of one bit period of the input signal (IN).

8. Device according to claim 1, **characterised in that** the feed forward equalizer (13, 14) comprises a tapped delay line (9) with a number of weighted taps (TL0-TLn) in connection with a common adding means (ADD), at least two of said taps (TL2, TL3) further being in connection with a transfer means (11), in particular a logic circuit, arranged in weighted connection with said adding means (ADD).

9. Device according to claim 1, **characterised by** an analog circuit element (15, 16) arranged between and in connection with both the feed forward equaliser (13, 14) and a modulator (7) for modulating the optical signal (OS), said analog circuit element (15, 16) having an inverse transmission function for an output signal of the feed forward equaliser (13, 14) with respect to a corresponding transmission function of said modulator (7) and/or a driver circuit for said modulator (7).

10. Device according to claim 1, **characterised by** value delivery means (8) for determining and delivering values $(c_0$-$c_n)$ for weighting contributions of the input signal (IN) in the feed forward equaliser (13, 14).

**Fig. 1**

**Fig. 2**

Fig. 3

Fig. 4

Fig. 5

European Patent
Office

**EUROPEAN SEARCH REPORT**

Application Number

EP 05 29 1545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | WO 2004/032385 A (NORTEL NETWORKS LIMITED; MCNICOL, JOHN; PARSONS, KIERAN; STRAWCZYNSKI,) 15 April 2004 (2004-04-15)<br>* page 10, line 13 - page 10, line 21 *<br>* page 15, line 29 - page 16, line 28 *<br>* page 17, line 9 - page 18, line 10; figures 3,4 * | 1-10 | H04B10/18<br>H04B10/155 |
| Y | US 4 989 212 A (MECHERLE ET AL) 29 January 1991 (1991-01-29)<br>* column 1, line 44 - column 2, line 6 *<br>* column 3, line 47 - column 3, line 65 *<br>* column 4, line 12 - column 4, line 20 *<br>* column 4, line 36 - column 4, line 48; figures 1,4 * | 1-10 | |
| A | EP 0 938 197 A (LUCENT TECHNOLOGIES INC) 25 August 1999 (1999-08-25)<br>* abstract; figure 1 * | 1-10 | |
| A | WO 2004/077111 A (OPLINK COMMUNICATIONS, INC) 10 September 2004 (2004-09-10)<br>* abstract; figures 1,7 * | 1-10 | TECHNICAL FIELDS SEARCHED (IPC)<br><br>H04B |
| A | PELARD C ET AL: "Multilevel signaling and equalization over multimode fiber at 10 Gbit/s"<br>GAAS IC SYMPOSIUM. 25TH. ANNUAL IEEE GALLIUM ARSENIDE INTEGRATED CIRCUIT SYMPOSIUM. TECHNICAL DIGEST 2003. SAN DIEGO, CA, NOV. 9 - 12, 2003, GAAS IC SYMPOSIUM - IEEE GALLIUM ARSENIDE INTEGRATED CIRCUIT SYMPOSIUM, NEW YORK, NY : IEEE, US, 9 November 2003 (2003-11-09), pages 197-199, XP010673659 ISBN: 0-7803-7833-4<br>* the whole document * | 1-10 | |

The present search report has been drawn up for all claims

| Place of search | Date of completion of the search | Examiner |
|---|---|---|
| Munich | 5 December 2005 | Phillips, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\& : member of the same patent family, corresponding document

EPO FORM 1503 03.82 (P04C01)

**EP 1 746 746 A1**

## ANNEX TO THE EUROPEAN SEARCH REPORT
## ON EUROPEAN PATENT APPLICATION NO.

EP 05 29 1545

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2005

| Patent document cited in search report | | Publication date | Patent family member(s) | | Publication date |
|---|---|---|---|---|---|
| WO 2004032385 | A | 15-04-2004 | AU | 2003249795 A1 | 23-04-2004 |
| | | | EP | 1563619 A1 | 17-08-2005 |
| | | | US | 2004067064 A1 | 08-04-2004 |
| | | | US | 2005008364 A1 | 13-01-2005 |
| US 4989212 | A | 29-01-1991 | NONE | | |
| EP 0938197 | A | 25-08-1999 | JP | 11331128 A | 30-11-1999 |
| | | | US | 6141127 A | 31-10-2000 |
| WO 2004077111 | A | 10-09-2004 | NONE | | |

For more details about this annex : see Official Journal of the European Patent Office, No. 12/82

9

**EP 1 746 746 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004032385 A1